# EUROPÄISCHE PATENTANMELDUNG

(11) **EP 0 650 883 A1**
(43) Veröffentlichungstag der Anmeldung: **03.05.1995**
(21) Anmeldenummer: 94116709.0
(22) Anmeldetag: 22.10.1994
(51) Int. Cl.: B62D 47/02, B60K 17/22, B60B 11/08

(54) **Einzelradaufhängung**

(30) Priorität: 27.10.1993 DE 4336672
(71) Anmelder: ZF FRIEDRICHSHAFEN Aktiengesellschaft, D-88038 Friedrichshafen (DE)
(72) Erfinder: Gazyakan, Ünal, D-88045 Friedrichshafen (DE); Lanz, Hermann, D-88699 Frickingen (DE); Eidam, Dirk-Uwe, D-50259 Pulheim (DE)

(57) **Zusammenfassung**

Eine Radaufhängung für ein Fahrzeugrad (1), das von einem Radträger (4) getragen ist, der gegenüber einem Fahrzeugrahmen durch Führungs- und Federmittel höhenbeweglich geführt ist und einen zusätzlichen Freiheitsgrad aufweist, erlaubt dem Radträger (4) eine Schwenkbewegung in einer Fahrzeugquerebene um eine in Fahrzeuglängsrichtung verlaufende Drehachse (16). Die Radführungskomponenten sind vor und hinter dem Rad (1) angeordnet, und das Antriebsmoment ist über eine innerhalb des Radträgers (4) angeordnete Drehmomentenübertragungseinrichtung (18) übertragen.

## Beschreibung

Die Erfindung betrifft eine Radaufhängung für ein Fahrzeugrad nach dem Oberbegriff des Anspruches 1.

Bekannte Achsen, insbesondere die Hinterachsen von Nutzkraftfahrzeugen, sind wegen der auftretenden hohen Achslasten als Starrachsen ausgebildet. Diese Starrachsen haben den Vorteil, daß sie sehr stabil sind und das Achsausgleichsgetriebe mit in den Achskörper integriert werden kann. Außerdem sind die Radlastschwankungen bei derartigen Achsen sehr gering.

Die durchgehende Achse beansprucht jedoch sehr viel Raum, da ihre Lage über der Fahrbahnebene durch den Reifendurchmesser weitgehend vorgegeben ist. D. h., daß beispielsweise der Mittelgang bei sogenannten Niederflur-Omnibussen nicht beliebig tief angeordnet werden kann, um einen möglichst bequemen Einstieg, insbesondere für gehbehinderte Menschen, zu schaffen, sondern die Lage des Mittelganges ist durch den höchsten Punkt der Achsbrücke vorgegeben, also durch die Oberkante des Achskörpers oder die Oberkante des Achsausgleichsgetriebes. Die Achsbrücke hat dazu noch den Nachteil, daß sie die Bodenfreiheit einschränkt.

Auch bei Lastkraftwagen tritt das beschriebene Problem auf. Um eine möglichst große Ladefläche zu erzielen, muß jeder zur Verfügung stehende freie Raum im Fahrzeug genutzt werden, da die höchstzulässigen Außenmaße der Fahrzeuge vom Gesetzgeber vorgeschrieben sind und somit zum Erzielen eines möglichst großen Laderaumes der Frachtraum nicht beliebig groß vorgesehen werden kann. Ein tiefes Herunterziehen des Frachtraumes wurde bisher, genauso wie bei den NiederflurOmnibussen beschrieben, durch die Abmaße der Starrachse bzw. der Achsbrücke begrenzt.

Diese Nachteile sind nur durch das Vorsehen einer Einzelradaufhängung zu umgehen, allerdings haben bekannte Einzelradaufhängungen konstruktive und fahrdynamische Nachteile.

In der US 2 441 807 ist eine Einzelradaufhängung für eine Zwillingsbereifung beschrieben. Bei dieser Einzelradaufhängung ist jedes einzelne Rad an einer eigenen, längs verlaufenen Schwinge aufgehängt, so daß sich jedes Rad des Zwillingspaketes einzeln vertikal nach oben oder unten bewegen kann, um Fahrbahnunebenheiten auszugleichen.

Nachteilig ist jedoch, daß die Räder in dieser Anordnung nur mit einem sehr hohen konstruktiven Aufwand oder überhaupt nicht angetrieben werden können. Für allradgetriebene Fahrzeuge oder den üblicherweise bei Nutzkraftfahrzeugen verwendeten Heckantrieb kommt diese Radaufhängung also nicht in Frage.

Da die genannten Schwingen in Fahrtrichtung links und rechts des Zwillingsreifenpaketes angeordnet sind, benötigt diese Radaufhängung auch verhältnismäßig viel Raum, der eigentlich als Laderaum Verwendung finden soll.

Bekannt sind auch Einzelradaufhängungen nach innen, also zur Fahrzeuglängsachse hin verlaufende Querlenker. Diese nach innen verlaufenden Querlenker beanspruchen jedoch ebenfalls einen Teil des Platzes, der zuvor durch das Vorsehen einer Einzelradaufhängung gewonnen wurde. Aus diesem Grunde stellt auch diese Lösung kein Optimum dar.

Der vorliegenden Erfindung liegt daher die Aufgabe zugrunde, die erwähnten Nachteile des Standes der Technik zu beseitigen, insbesondere eine Radaufhängung für ein Fahrzeugrad vorzusehen, die platzsparend ist.

Erfindungsgemäß wird diese Aufgabe durch eine Radaufhängung für ein Fahrzeugrad nach den Merkmalen des kennzeichnenden Teils des Anspruches 1 gelöst.

Dadurch, daß die Radführungskomponenten vor und hinter dem Rad, und nicht, wie bekannt, seitlich davon, angeordnet sind, ergibt sich zwischen den Rädern ein breiter, zusätzlicher Raum, dessen Vorteil darin liegt, daß er verhältnismäßig tief angeordnet werden kann. Der begrenzende Faktor ist nun nicht mehr der Achskörper oder das Achsausgleichsgetriebe, sondern die, je nach Einsatzzweck des Fahrzeugs, variierende Bodenfreiheit.

Ein Achsausgleichsgetriebe kann an einer Stelle vor oder hinter dem anzutreibenden Rad angeordnet sein, also an irgendeiner Stelle im Fahrzeug, an der es nicht stört.

Insbesondere für den Einsatz in Niederflur-Omnibussen im öffentlichen Personen-Nahverkehr bietet sich der Einsatz der erfindungsgemäßen Radaufhängung an. Wird der Mittelgang sehr tief heruntergezogen, was mit der erfindungsgemäßen Radaufhängung möglich ist, können selbst Rollstuhlfahrer ohne fremde Hilfe bequem in das Fahrzeug einsteigen.

Vorteilhafte Weiterbildungen und Ausgestaltungen der Erfindung ergeben sich aus den Unteransprüchen 2 bis 11 und dem nachfolgend anhand der Zeichnung beschriebenen Ausführungsbeispiel.
Es zeigt:
- Fig. 1: eine Draufsicht auf eine erfindungsgemäße Radaufhängung;
- Fig. 2: eine Vorderansicht der in Fig. 1 dargestellten Radaufhängung;
- Fig. 3: eine Seitenansicht der in Fig. 1 dargestellten Radaufhängung;
- Fig. 4: eine Draufsicht auf eine alternative Ausführung der erfindungsgemäßen Radaufhängung;
- Fig. 5: eine Vorderansicht der in Fig. 4 dargestellten Radaufhängung und
- Fig. 6: eine Seitenansicht der in Fig. 4 dargestellten Radaufhängung.

Da das Fahrwerk symmetrisch aufgebaut ist, werden die nachfolgend erwähnten Bauteile und Bezugszeichen immer nur auf ein Rad bezogen.

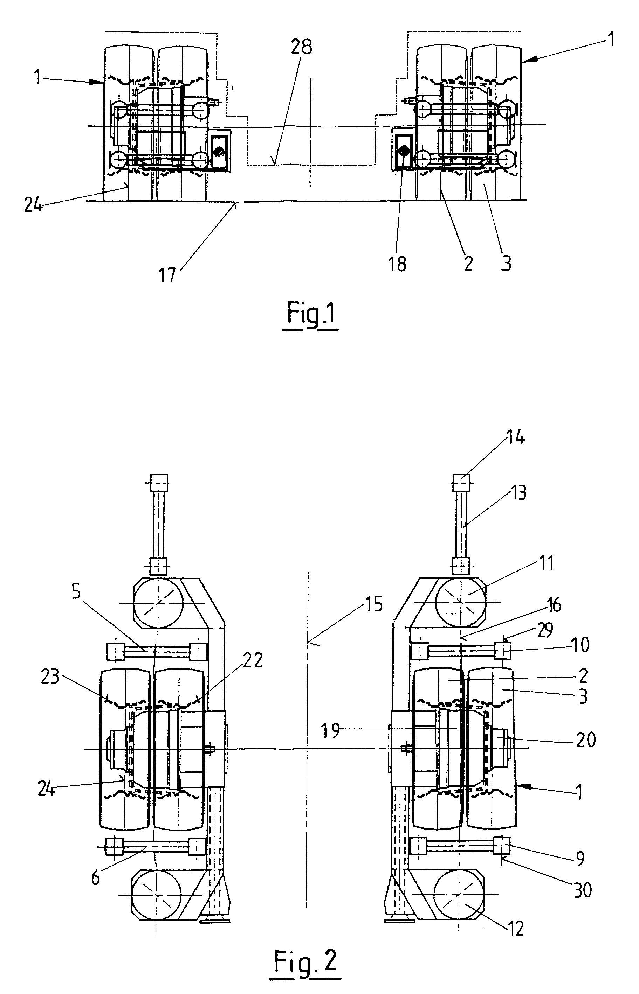

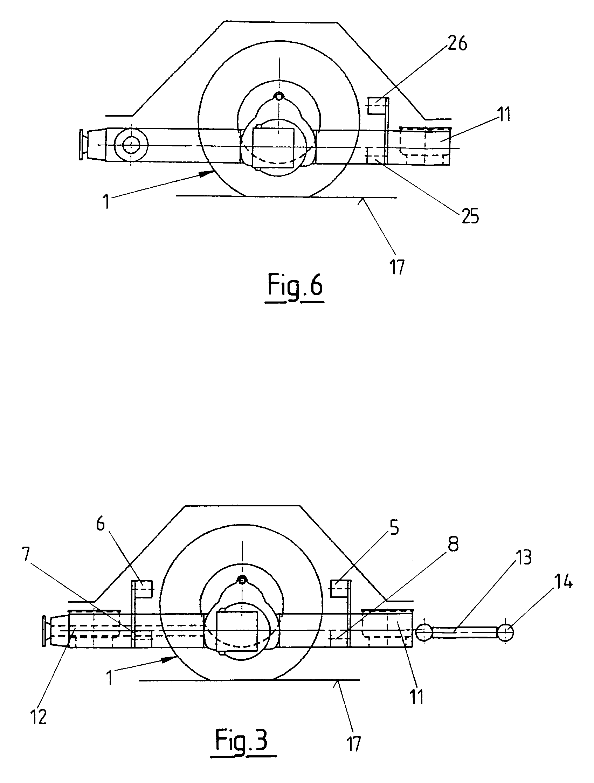

Bezug nehmend auf die Fig. 1, 2 und 3 ist eine erste Ausführungsform einer erfindungsgemäßen Radaufhängung dargestellt.

Hierbei ist ein Rad 1, das als Zwillingsreifenpaket ausgestaltet ist und aus zwei einzelnen Reifen 2, 3 besteht, an einem Radträger 4 angeordnet. Der Radträger 4 wiederum ist an vier Querlenkern 5 bis 8 befestigt, die wiederum an Aufhängepunkten 9, 10 an einem Rahmen (nicht dargestellt) des Fahrzeuges an sogenannten Molekulargelenken 29, 30 angebracht sind.

Auf dem Radträger 4 stützen sich auch noch zwei Luftfedern 11, 12 ab, die die Verbindung zur hier nicht dargestellten Karosserie herstellen.

Vorzugsweise ist der Radträger 4 als Hohlprofil ausgestaltet, da hierdurch ein geringes Eigengewicht und gute Festigkeitswerte erzielt werden und der Radträger, beispielsweise durch Kanten eines Bleches und anschließendes Verschweißen, kostengünstig und einfach hergestellt werden kann.

Am Radträger 4 ist kein Längslenker, sondern eine Längsstrebe 13 befestigt, die mit ihrem anderen Ende 14 mit dem nicht dargestellten Fahrzeugrahmen verbunden ist.

Die gesamten Radführungskomponenten sind somit vor und hinter dem Rad 1 angeordnet, so daß zu der Mittelachse einer Längsachse 15 des Fahrzeuges hin sehr viel Raum bleibt, der bei Omnibussen als Mittelgang oder bei Lastkraftwagen als zusätzliche Ladefläche genutzt werden kann.

Aufgrund der beschriebenen Aufhängung des Rades 1 können sich die Zwillingsräder um eine Drehachse 16, die weitgehend parallel zur Längsachse 15 des Fahrzeuges verläuft, drehen und somit die vorhandenen Querkräfte aufnehmen. Die Aufnahme der senkrecht zu einer Fahrbahnebene 17 wirkenden Kräfte übernehmen die Luftfedern 11, 12, ebenso wie die Abstützung der Antriebs- und Bremsmomente.

Fährt ein mit der erfindungsgemäßen Radaufhängung versehenes Fahrzeug über eine unebene Straße, so stellen folgende Punkte Fixpunkte dar, die sich nicht bewegen: die Aufhängepunkte 9, 10 der Querlenker und das Ende 14 der Längsstrebe 13 sowie die Oberseiten der Luftfedern 11, 12.

Der Antrieb des Rades 1 der dargestellten angetriebenen Achse erfolgt über eine im Radträger 4 verlaufende Welle 18. Durch die Ausgestaltung des Radträgers 4 als Hohlprofil ist dies problemlos möglich. Die Welle 18 überträgt das Antriebsmoment an den gesamten, sich in zwei Felgen 19, 20 befindlichen Endantrieb 21. In den Felgen 19, 20 ist ein nicht dargestelltes Stirnradgetriebe oder ein Planetengetriebe untergebracht, das die Räder antreibt, so daß der Antrieb der Räder problemlos zu realisieren ist.

Durch die im Radträger 4 verlaufende Welle 18 ist die Welle 18 sehr gut gegen alle Einflüsse von außen, beispielsweise Witterungseinflüsse oder umherfliegende Steine, geschützt.

Da bei der erfindungsgemäßen Radaufhängung der Endantrieb 21 in den Felgen 19, 20 untergebracht ist, weisen diese gegenüber bekannten Felgen, die in den Fig. 1 und 2 durch die gestrichelten Linien 22, 23 dargestellt sind, eine andere Form auf. Die der Fahrzeuglängsachse 15 nähere, also innengelegene, Felge 19 weist eine Einpreßtiefe auf, die bis an die Mittellängsebene 24 des äußeren Reifens 3 heranreicht. Somit ist ausreichend Platz für den Endantrieb 21 vorhanden. Die äußere Felge 20 ist entsprechend kleiner und wird auf die innere Felge 19 aufgesetzt.

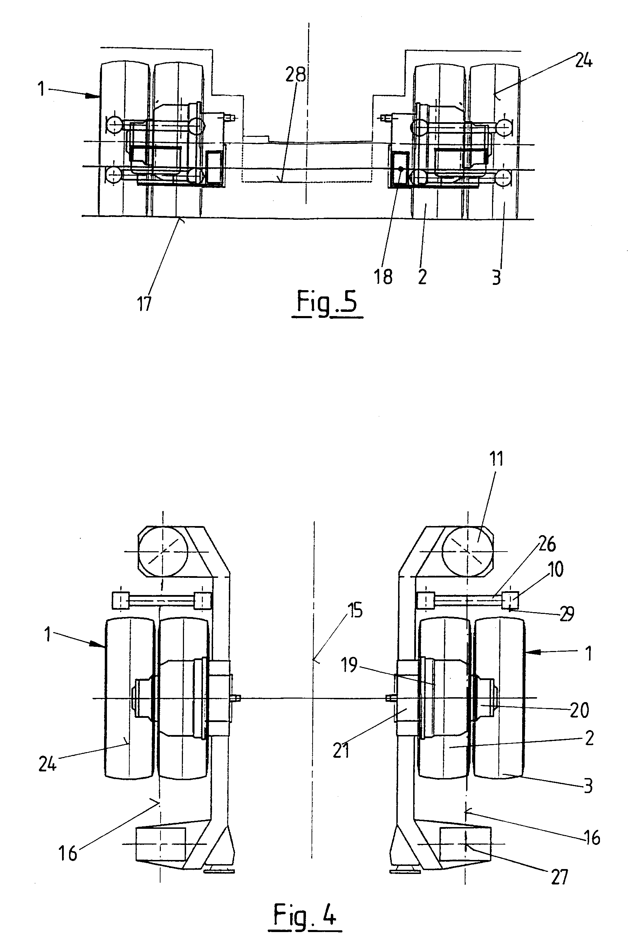

Bezug nehmend auf die Fig. 4, 5 und 6 ist ein alternatives Ausführungsbeispiel der erfindungsgemäßen Radaufhängung dargestellt.

Die Figuren zeigen eine Längslenkerkonstruktion, bei der der Radträger 4 als Längslenker ausgebildet ist.

Hierzu werden nur ein unterer Querlenker 25 und ein oberer Querlenker 26 benötigt, das andere Querlenkerpaar wurde durch einen festen Anlenkpunkt 27 ersetzt, der sich direkt auf dem Radträger 4 befindet.

Der Vorteil dieser Ausführung liegt in einer sehr flachen Bauweise, durch die noch zusätzlich Raum gewonnen wird.

Die Zwillingsbereifung dreht sich hierbei immer noch um die bereits beschriebene Drehachse 16, und die Querlenker 25, 26 haben nur die Aufgabe, ein Verkippen des Zwillingsreifenpaketes um die horizontale Drehachse 16 zu vermeiden.

Alle anderen Merkmale des zuerst beschriebenen Ausführungsbeispieles, wie der durch den Radträger 4 verlaufende Antrieb, bleiben voll erhalten, so daß in den Fig. 4, 5 und 6 die gleichen Bezugszeichen für bereits beschriebene Teile verwendet werden.

Eine mögliche Form einer Karosserie eines Fahrzeuges, die auch zeigt, wieviel Platz durch den Einsatz der erfindungsgemäßen Radaufhängung gewonnen wurde, zeigt die gestrichelte Linie 28 in den Fig. 1 und 5.

### Bezugszeichen

- 1: Rad
- 2: innerer Reifen
- 3: äußerer Reifen
- 4: Radträger
- 5: Querlenker
- 6: Querlenker
- 7: Querlenker
- 8: Querlenker
- 9: Aufhängepunkte der Querlenker
- 10: Aufhängepunkte der Querlenker
- 11: Luftfeder
- 12: Luftfeder
- 13: Längsstrebe
- 14: Ende der Längsstrebe
- 15: Längsachse des Fahrzeugs
- 16: Drehachse
- 16: Drehachse
- 17: Fahrbahnebene
- 18: Welle im Radträger
- 19: innere Felge
- 20: äußere Felge
- 21: Endantrieb
- 22: alte Felgenform
- 23: alte Felgenform
- 24: Mittelebene des äußeren Reifens
- 25: Querlenker unten
- 26: Querlenker oben
- 27: fester Anlenkpunkt
- 28: Kontur der Karosserie
- 29: Molekulargelenk
- 30: Molekulargelenk

## Patentansprüche

1. Radaufhängung für ein Fahrzeugrad (1), das von einem Radträger (4) getragen ist, der gegenüber einem Fahrzeugrahmen durch Führungs- und Federmittel höhenbeweglich geführt ist, und einen zusätzlichen Freiheitsgrad aufweist, der dem Radträger (4) eine Schwenkbewegung in einer Fahrzeugquerebene um eine in Fahrzeuglängsrichtung verlaufende Drehachse (16) erlaubt, dadurch **gekennzeichnet,** daß Radführungskomponenten vor und hinter dem Rad (1) angeordnet sind und daß das Antriebsmoment über eine innerhalb des Radträgers (4) angeordnete Drehmomentenübertragungseinrichtung (18) übertragen ist.

2. Radaufhängung nach Anspruch 1, dadurch **gekennzeichnet,** daß das Fahrzeugrad (1) eine Zwillingsbereifung (2, 3) oder einen Breitreifen aufweist.

3. Radaufhängung nach Anspruch 1, dadurch **gekennzeichnet,** daß die Drehmomentenübertragungseinrichtung eine Welle (18) ist.

4. Radaufhängung nach Anspruch 1 und 2, dadurch **gekennzeichnet,** daß die näher an der Längsachse (15) des Fahrzeuges gelegene Felge (19) einer Zwillingsbereifung (2, 3) eine Einpreßtiefe aufweist, die sich wenigstens annähernd bis zur Mittelebene (24) eines äußeren Rades (3) der Zwillingsbereifung (2, 3) erstreckt und daß ein Endantrieb (21) in der Felge (19) mit hoher Einpreßtiefe untergebracht ist.

5. Radaufhängung nach Anspruch 4, dadurch **gekennzeichnet,** daß der Endantrieb (21) als Stirnradgetriebe oder Planetengetriebe ausgeführt ist.

6. Radaufhängung nach einem der Ansprüche 1 bis 5, dadurch **gekennzeichnet,** daß der Radträger (4) als Hohlprofil ausgebildet ist.

7. Radaufhängung nach Anspruch 1, dadurch **gekennzeichnet,** daß der Radträger (4) als Längslenker ausgebildet ist.

8. Radaufhängung nach Anspruch 7, dadurch **gekennzeichnet,** daß ein oberer (26) und ein unterer (25) Querlenker vorgesehen sind.

9. Radaufhängung nach Anspruch 7 und 8, dadurch **gekennzeichnet,** daß ein fester Anlenkpunkt (27) vorgesehen ist, der den Radträger (4) mit dem Fahrzeugrahmen verbindet.

10. Radaufhängung nach einem der vorhergehenden Ansprüche, dadurch **gekennzeichnet,** daß die Radaufhängung mit Molekulargelenken (29, 30) am Fahrzeugrahmen befestigt ist.

11. Radaufhängung nach einem der vorhergehenden Ansprüche, **gekennzeichnet** durch die Verwendung bei Nutzkraftfahrzeugen.
